# NEUE EUROPÄISCHE PATENTSCHRIFT

(11) **EP 2 709 774 B2**
(45) Veröffentlichungstag und Bekanntmachung des Hinweises auf die Entscheidung über den Einspruch: **06.01.2021**
(45) Hinweis auf die Patenterteilung: 03.06.2015
(21) Anmeldenummer: 12810043.5
(22) Anmeldetag: 10.10.2012
(51) Int. Cl.: B08B 3/04, B03B 5/00

(54) **VORRICHTUNG ZUM VORWASCHEN ZERKLEINERTER KUNSTSTOFFTEILE**
APPARATUS FOR PREWASHING COMMINUTED PLASTIC PARTS
DISPOSITIF POUR PRÉLAVER DES PIÈCES DE PLASTIQUE FRAGMENTÉES

(30) Priorität: 06.06.2012 DE 102012209574
(43) Veröffentlichungstag der Anmeldung: 26.03.2014
(73) Patentinhaber: HERBOLD MECKESHEIM GMBH, 74909 Meckesheim (DE)
(72) Erfinder: WEBER, Heiko, 59077 Hamm (DE); WATZELT, Holger, 69151 Neckargemünd (DE)
(74) Vertreter: Patent- und Rechtsanwälte Ullrich & Naumann
(86) Internationale Anmeldenummer: PCT/DE2012/200067
(87) Internationale Veröffentlichungsnummer: WO 2013/182174

(56) Entgegenhaltungen:
- DE-A1- 2 803 164
- DE-A1- 2 804 729
- DE-A1- 3 210 972
- DE-A1- 4 205 767
- DE-A1- 4 426 608
- DE-A1- 19 642 207
- DE-C2- 3 210 973
- DE-C2- 3 210 976
- DE-U1- 9 207 306
- US-A- 5 185 041

## Beschreibung

Die Erfindung betrifft eine Vorrichtung zum Vorwaschen zerkleinerter Kunststoffteile und zum Abscheiden von Schwerstoffen bzw. mineralischen Bestandteilen wie Sand, Schluff, etc. von den zerkleinerten Kunststoffteilen.

Es geht hier grundsätzlich um eine Vorwascheinheit, die die grundsätzliche Funktion eines Schwerstoffabscheiders als Schutz nachfolgender maschinenbaulicher Komponenten wie beispielsweise Schneidmühle, Friktionswäscher, mechanischer Trockner, etc. hat. Außerdem dient die Vorwascheinheit zum Vorwaschen von zerkleinerten Kunststoffteilen, wobei im Wesentlichen mineralische Bestandteile wie beispielsweise Sand oder Schluff von den Kunststoffteilen abgewaschen werden. Es handelt sich hier um eine kombinierte Vorrichtung mit der Funktion eines Schwerstoffabscheiders und eines Vorwäschers.

Aus der DE 28 04 729 A1 ist ein Verfahren und eine entsprechende Vorrichtung zum Waschen und Trocknen zerkleinerter Kunststoffabfälle vorbekannt. Dabei werden die Kunststoffteile durch einen Behälter mit Waschflüssigkeit hindurch gefördert und dabei gewaschen.

In der US 5,185,041 A ist eine Vorrichtung und ein entsprechendes Verfahren zum Waschen zerkleinerter Kunststoffteile offenbart. Die Kunststoffteile werden in ein sich drehendes Rohr eingegeben und dort mit Waschflüssigkeit besprüht. Das Rohr weist Ausnehmungen auf, aus denen die Waschflüssigkeit austreten kann.

Aus der Praxis sind Vorrichtungen der gattungsgemäßen Art bekannt, die entweder nur als Schwerstoffabscheider arbeiten oder die Aufgabe eines Vorwäschers erfüllen. Beide Aufgaben werden regelmäßig nur unzureichend in derselben Vorrichtung gelöst. Außerdem sind die aus der Praxis bekannten Vorrichtungen in der Konstruktion aufwändig und daher teuer.

Der vorliegenden Erfindung liegt daher die Aufgabe zugrunde, eine Vorrichtung zum Vorwaschen zerkleinerter Kunststoffteile und zum Abscheiden von Schwerstoffen anzugeben, die in Kombination beide Aufgabe erfüllt, einfach konstruiert ist und nicht zuletzt aufgrund der einfachen Konstruktion störungsfrei arbeitet.

Die voranstehende Aufgabe ist durch die Merkmale des Patentanspruchs 1 gelöst. Danach umfasst die erfindungsgemäße Vorrichtung eine Materialaufgabe für die vorzuwaschenden Kunststoffteile, einen Abscheidebereich für die Schwerstoffe, der eine im Betrieb mit Wasser gefüllte Abscheidekammer umfasst, einen Waschbereich zum weiteren Waschen der aus dem Abscheidebereich kommenden Schwimmfraktion, der eine mit Dusch-ISprühwasser arbeitende Waschkammer umfasst, und einen Abzugsbereich für das im Waschbereich gewaschene Gutmaterial, der eine im Betrieb mit Wasser gefüllte Abzugskammer umfasst. Die zerkleinerten Kunststoffteile werden über die Materialauf gabe vorzugsweise durch Schwerkraft in die Abscheidekammer verbracht und gelangen über eine erste Fördereinrichtung als Schwimmfraktion in die Waschkammer. Als Gutmaterial werden die Kunststoffteile in die Abzugskammer gefördert und gelangen von dort über eine zweite Fördereinrichtung zu einem Materialaustrag. Von dort aus ist es denkbar, dass die vorgewaschenen Kunststoffteile in einen Container oder auf ein Förderband zum Fördern in eine weitere Bearbeitungsstation fallen.

Zur Abscheidung von Schwerstoffen ist die erfindungsgemäße Vorrichtung mit dem zuvor genannten Abscheidebereich für Schwerstoffe ausgestattet, der eine mit Wasser gefüllte Abscheidekammer umfasst. Schwerstoffe, die bei anhaltender Anhaftung an den Kunststoffteilen an nachfolgenden Bearbeitungsaggregaten zu Beschädigungen führen können, lösen sich von den Kunststoffteilen und sinken im Wasser der Abscheidekammer nach unten und gelangen dort in den Wirkbereich eines Schwergutabzugs. Ein solcher Schwergutabzug kann in Form einer im unteren Bereich der Abscheidekammer angeordneten Schnecke ausgeführt sein, so dass das sedimentierte Schwergut abförderbar ist. Alternativ zur Schnecke kann im Schwergutabzug ein Container bzw. ein Behältnis mit Entwässerungseinrichtung installiert sein. Auch durch diese Maßnahme lässt sich das sedimentierte Schwergut entsorgen.

Um die Gefahr des Absinkens von Gutmaterial (zerkleinerte Kunststoffteile) zu minimieren, kann die Abscheidekammer mit einem nach unten in die Abscheidekammer ragenden Rührwerk und/oder mit einer Lufteindüsung und/oder einer Wassereindüsung ausgestattet sein, so dass das Gutmaterial immer wieder an die Oberfläche zur weiteren Förderung gelangt.

Die erste Fördereinrichtung erstreckt sich in vorteilhafter Weise von der Abscheidekammer in den Waschbereich bzw. in die Waschkammer, wobei sich der Waschbereich an den Abscheidebereich anschließt. In ganz besonders vorteilhafter Weise erstreckt sich die erste Fördereinrichtung bis zu dem oder in den Abzugsbereich bzw. in die Abzugskammer, so dass die erste Fördereinrichtung dazu dient, die Schwimmfraktion komplett durch den Waschbereich und somit auch durch die Waschkammer hindurch zu fördern.

Beliebige Fördereinrichtungen sind realisierbar, sofern sie geeignet sind, die oben auf schwimmende Schwimmfraktion im Wesentlichen horizontal zu fördern. In ganz besonders vorteilhafter Weise kann die erste Fördereinrichtung mindestens eine, vorzugsweise zwei Förderschnecken umfassen, wobei die beiden Förderschnecken parallel zu einander angeordnet sind und vorzugsweise horizontal verlaufen. Durch die beiden Förderschnecken wird/werden jedenfalls die Schwimmfraktion, d.h. die zerkleinerten Kunststoffteile, in und durch den Waschbereich gefördert.

Im Waschbereich, vorzugsweise in der Waschkammer, kann ein als Siebbereich ausgeführter Schneckentrog vorgesehen sein, der zum Ablauf von Waschwasser dient. Das Waschwasser wird über Waschdüsen zur Verfügung gestellt, die zum Besprühen bzw. Waschen der dort hin geförderten Schwimmfraktion dienen die eigentliche Vorwäsche findet somit im Waschbereich bzw. in der Waschkammer statt.

Unterhalb des Waschbereichs, vorzugsweise unterhalb des Siebbereichs, ist eine Auffangkammer zum Sammeln des abgelaufenen Waschwassers angeordnet. Die Auffangkammer ist derart dimensioniert, dass sie über einen gewissen Zeitraum hinweg eine hinreichend große Menge an Waschwasser aufnehmen kann, welches über die Waschdüsen kontinuierlich anfällt.

In Bezug auf eine Reduktion des Wasserverbrauchs ist es von Vorteil, wenn die Auffangkammer als Sedimentabscheider ausgeführt ist, wobei der Klarlauf der Auffangkammer mit einer Pumpenkammer strömungsverbunden ist. Somit gelangt der Klarlauf aus der Waschkammer in die Pumpenkammer und wird von dort über eine Pumpe zu den Waschdüsen gefördert, so dass das Waschwasser zirkuliert.

Im Solebereich der Auffangkammer ist in weiter vorteilhafter Weise eine Absaugeinrichtung für das Sediment vorgesehen bzw. wirkt eine entsprechende Absaugeinrichtung, wobei diese diskontinuierlich arbeiten kann. Das Sediment aus Sand oder Schluff wird somit aus der Auffangkammer vorzugsweise diskontinuierlich abgezogen.

Vom Waschbereich bzw. von der Waschkammer aus wird das Gutmaterial über die erste Fördereinrichtung kontinuierlich weiter gefördert, nämlich in die Abzugskammer. Diese ist - wie die Abscheidekammer, mit Wasser gefüllt. Dort ist eine zweite Fördereinrichtung vorgesehen, die - wie die erste Fördereinrichtung - eine Förderschnecke umfassen kann. Bei Vorkehrung einer solchen Förderschnecke ist es von Vorteil, diese zwischen den beiden dort endenden Förderschnecken der ersten Fördereinrichtung zu positionieren, und zwar unter einem Winkel, der das Gutmaterial aus der Ebene der verschiedenen Bereiche/Kammern herausfördert, regelmäßig schräg nach oben oder schräg nach oben und zur Seite weg.

Die Förderschnecke erstreckt sich bis zu einem Materialaustrag hin, der in Form eines Schachts ausgeführt sein kann.

Zur Unterstützung des Materialtransports von der Abzugskammer aus zum Materialaustrag können in der Abzugskammer Lufteindüsungen und/oder Wassereindüsungen vorgesehen sein, so dass das dadurch aufgewirbelte Gutmaterial mühelos in den Wirkbereich der zweiten Fördereinrichtung bzw. der Förderschnecke gelangt.

Im Bodenbereich der Abzugskammer bildet sich Sediment. Entsprechend kann dort eine Absaugeinrichtung für das Sediment vorgesehen sein bzw. wirken. Eine solche Absaugeinrichtung kann ebenfalls diskontinuierlich arbeiten und dabei das Sediment beispielsweise über eine Materialschleuse absaugen.

Entsprechend den voranstehenden Ausführungen zeichnet sich die erfindungsgemäße Vorrichtung durch die Kombination eines Schwerstoffabscheiders mit effektiver Materialwäsche aus, wobei die Materialwäsche in einem fließenden Wasserstrom erfolgen kann. Zur Minimierung des Wasserverbrauchs ist eine Wasseraufbereitung mit Kreislaufführung des Wassers vorgesehen bzw. integriert, wodurch ein nicht unerheblicher Beitrag zum Umweltschutz geleistet wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht, teilweise geschnitten, ein Ausführungsbeispiel einer erfindungsgemäßen Vorrichtung mit den wesentlichen Bereichen bzw. Kammern/Funktionselementen,
- Fig. 2: in einer schematischen Seitenansicht, teilweise geschnitten, den Gegenstand aus Fig. 1, jedoch ohne Maschinengestell,
- Fig. 3: in einer schematischen Draufsicht den Gegenstand aus Fig. 1,
- Fig. 4: in einer perspektivischen Ansicht, im Bereich der vorderen Förderschnecke geschnitten, den Gegenstand aus Fig. 1 und
- Fig. 5: in einer perspektivischen Ansicht, im Schnitt vor der hinteren Förderschnecke den Gegenstand aus Fig. 4.

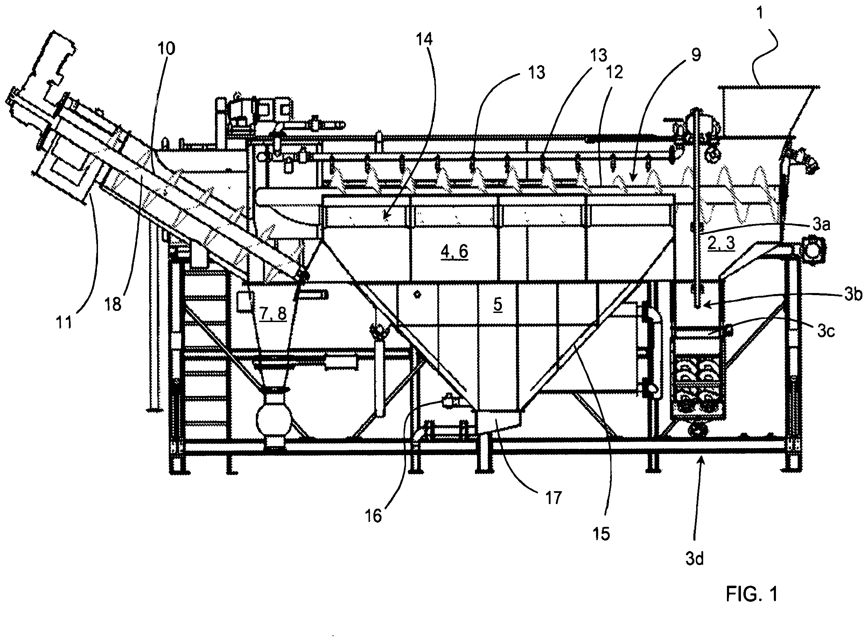

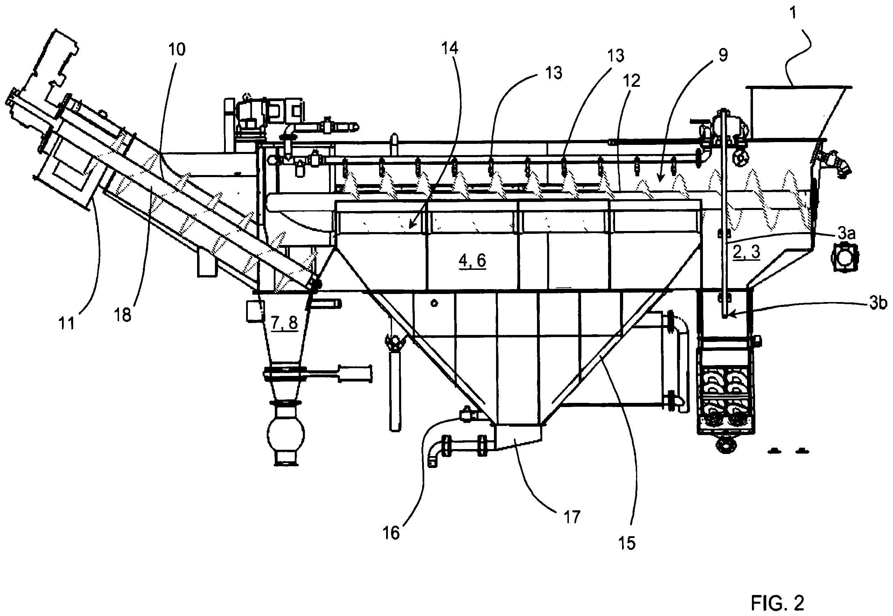

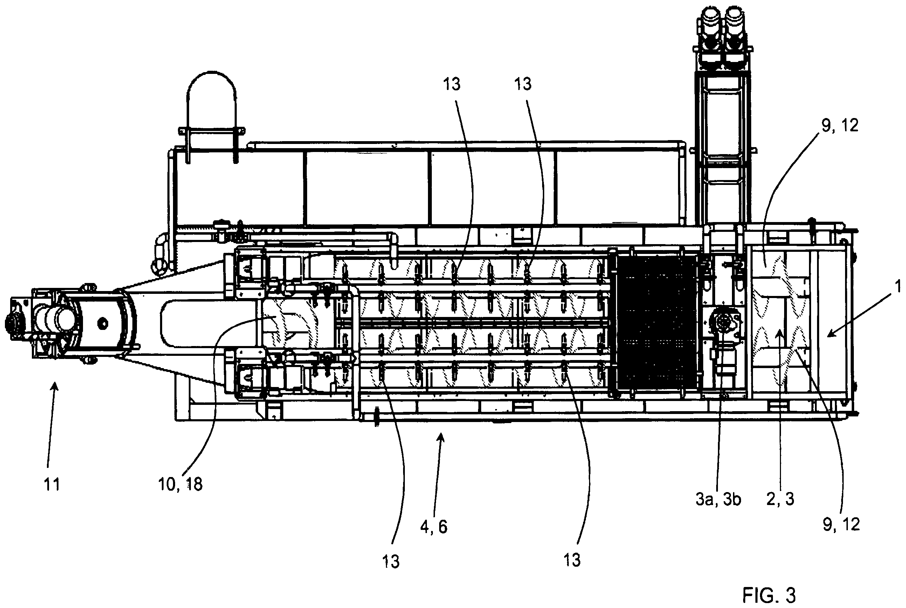

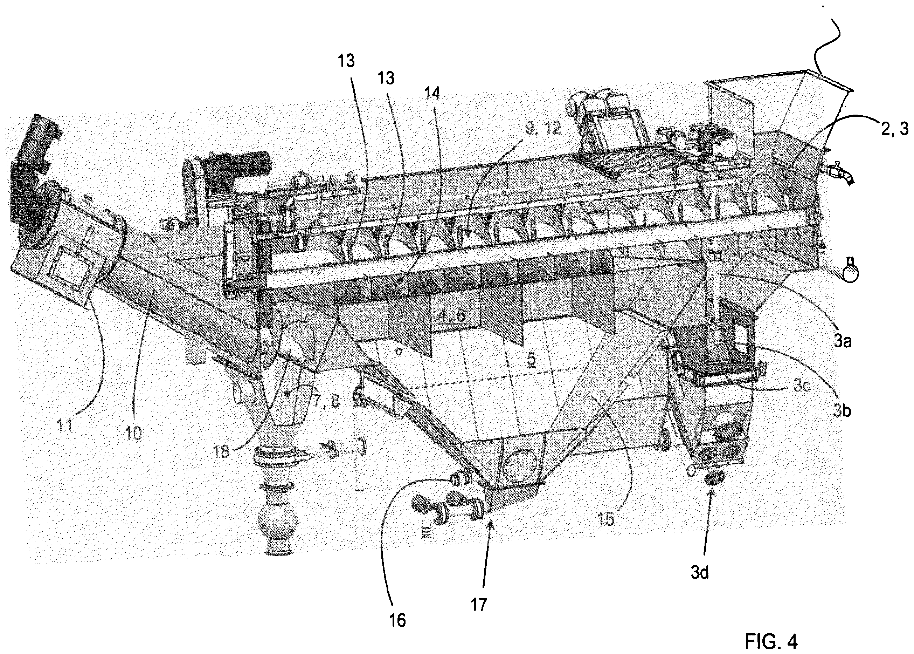

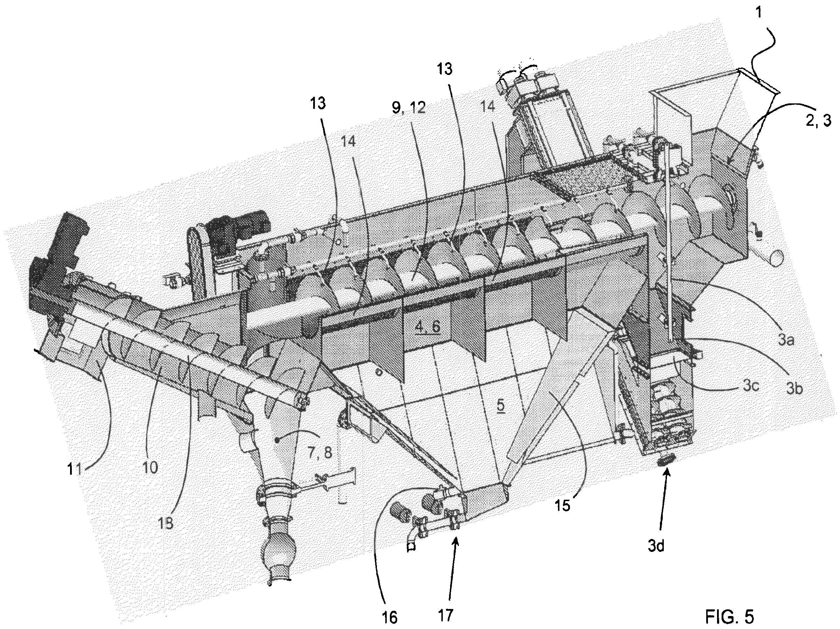

Die Figuren 1 bis 5 zeigen in schematischen Ansichten ein Ausführungsbeispiel einer erfindungsgemäßen Vorrichtung zum Vorwaschen zerkleinerter Kunststoffteile und zum Abscheiden von Schwerstoffen bzw. mineralischen Bestandteilen wie Sand, Schluff, etc. von den Kunststoffteilen.

Die Kunststoffteile werden über eine Materialaufgabe 1 der Vorrichtung zugeführt. Von dort aus gelangen die Teile in einen Abscheidebereich 2 für die Schwerstoffe, der eine im Betrieb mit Wasser gefüllte Abscheidekammer 3 umfasst.

In der Abscheidekammer 3 sind ein Rührwerk 3a und eine Lufteindüsung 3b und/oder eine Wassereindüsung vorgesehen, um dem Absinken von Gutmaterial entgegenzuwirken.

Die Figuren zeigen gemeinsam, dass unterhalb der Abscheidekammer 3, direkt unterhalb des Rührwerks 3a, eine Klappe 3c vorgesehen ist, die das im Abscheidebereich 2 bzw. in der Abscheidekammer 3 sinkende Material zurückhält, bevor es in den darunter befindlichen Schwergutabzug 3d gelangt. Diese Vorkehrung ist von besonderem Vorteil, um nämlich einen Fehlaustrag von schwimmenden Teilen durch den Schwergutabzug 3d zu verhindern. Für den Fall, dass sich auf der Klappe 3c eine Sedimentschicht aus Sand, Schmutz, etc. bildet, kann eine Zeitsteuerung in weiter vorteilhafter Weise vorgesehen sein, die die Klappe kurzzeitig öffnet, so dass sich das Sediment in den Schwergutabzug 3d bewegt. Danach wird die Klappe 3c wieder - automatisch oder manuell - geschlossen. Die Klappe 3c ermöglicht es, Kunststoffe durch die Vorrichtung zu schleusen, welche im Wasser üblicherweise absinken und - ohne Vorkehrung der Klappe -, nämlich in herkömmlichen Schwerstoffabscheidern, für das Recycling verloren gehen.

Des Weiteren gehört zu der Vorrichtung ein Waschbereich 4 zum weiteren Waschen der aus dem Abscheidebereich 2 kommenden Schwimmfraktion. Der Waschbereich 4 umfasst eine mit Dusch-/Sprühwasser arbeitende Waschkammer 6. Bei Vorkehrung eines Wasserbads befindet sich diese ebenfalls in der Waschkammer 6.

An den Waschbereich 4 schließt sich ein Abzugsbereich 7 für das im Waschbereich 4 gewaschene Gutmaterial an. Der Abzugsbereich 7 umfasst eine im Betrieb mit Wasser gefüllte Abzugskammer 8.

Die zerkleinerten Kunststoffteile gelangen über die Materialaufgabe 1 durch Schwerkraft in die Abscheidekammer 3. Von dort aus erstreckt sich eine erste Fördereinrichtung 9 durch den Waschbereich 4 hindurch, so dass die Schwimmfraktion vom Abscheidebereich 2 in den Waschbereich 4 und von dort als Gutmaterial in die Abzugskammer 8 gefördert wird. Im Abzugsbereich 7 bzw. in der Abzugskammer 8 ist eine zweite Fördereinrichtung 10 vorgesehen, die das vorgewaschene Gut zu einem Materialaustrag 11 fördert.

Die Figuren lassen erkennen, dass die erste Fördereinrichtung 9 eine Förderschnecke 12 umfasst, genauergesagt zwei Förderschnecken 12, die parallel zueinander horizontal verlaufen. Die beiden Förderschnecken 12 fördern in idealer Weise die Teile vom Abscheidebereich 2 durch den Waschbereich 4 hindurch bis in den Abzugsbereich 7 bzw. die Abzugskammer 8.

In den Figuren ist des Weiteren angedeutet, dass im Waschbereich 4 Waschdüsen 13 zum Besprühen bzw. Waschen der dort hin geförderten Schwimmfraktion ausgebildet sind. Das Waschwasser fällt mit dem von den Teilen gelösten Schmutz auf einen als Siebbereich ausgeführten Schneckentrog 14, der zum Ablauf des Waschwassers dient.

Unterhalb des Waschbereichs 4, vorzugsweise unterhalb des Siebbereichs bzw. Schneckentrogs 14, ist eine Auffangkammer 15 zum Sammeln des abgelaufenen Waschwassers vorgesehen, wobei die Auffangkammer 15 als Sedimentabscheider ausgeführt ist. Der Klarlauf 16 der Auffangkammer 15 ist mit einer Pumpenkammer strömungsverbunden, von der aus der Klarlauf 16 als Waschwasser zu den Waschdüsen 13 gefördert wird. Im Solenbereich der Auffangkammer 15 ist eine Ausschleußung 17 für das Sediment vorgesehen. Alternativ dazu könnte eine Absaugeinrichtung für das Sediment vorgesehen sein, wobei eine solche Absaugeinrichtung vorzugsweise diskontinuierlich arbeiten kann.

In den Figuren ist des Weiteren angedeutet, dass die Förderschnecken 12 der ersten Fördereinrichtung 9 sich bis in die Abzugskammer 8 hinein erstrecken. Dort beginnt die zweite Fördereinrichtung 10, deren Förderschnecke 18 im Bereich zwischen den beiden Förderschnecken 12 der ersten Fördereinrichtung 9 beginnt und von dort aus das vorgewaschene Gut in einen Bereich außerhalb der Vorrichtung fördert, nämlich bis hin zu dem Materialaustrag 11, so dass dort das Gut aus der Vorrichtung beispielsweise auf ein in der Fig. nicht gezeigten Förderband oder in einen Container fallen kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, dieses jedoch nicht auf das Ausführungsbeispiel einschränkt.

### Bezugszeichenliste

- 1: Materialaufgabe
- 2: Abscheidebereich
- 3: Abscheidekammer
- 3a: Rührwerk
- 3b: Lufteindüsung
- 3c: Klappe
- 3d: Schwergutabzug
- 4: Waschbereich
- 5: Wasserbad
- 6: Waschkammer
- 7: Abzugsbereich
- 8: Abzugskammer
- 9: erste Fördereinrichtung
- 10: zweite Fördereinrichtung
- 11: Materialaustrag
- 12: Förderschnecke (von 9)
- 13: Waschdüse
- 14: Schneckentrog
- 15: Auffangkammer
- 16: Klarlauf
- 17: Ausschleußung
- 18: Förderschnecke (von 10)

## Patentansprüche

1. Vorrichtung zum Vorwaschen zerkleinerter Kunststoffteile und zum Abscheiden von Schwerstoffen bzw. mineralischen Bestandteilen wie Sand, Schluff, etc., mit einer Materialaufgabe (1) für die vorzuwaschenden Kunststoffteile, einem Abscheidebereich (2) für die Schwerstoffe, der eine im Betrieb wassergefüllte Abscheidekammer (3) umfasst, einem Waschbereich (4) zum weiteren Waschen der aus dem Abscheidebereich (2) kommenden Schwimmfraktion, der eine mit Dusch-/Sprühwasser arbeitende Waschkammer (6) umfasst, und einem Abzugsbereich (7) für das im Waschbereich (4) gewaschene Gutmaterial, der eine im Betrieb mit Wasser gefüllte Abzugskammer (8) umfasst, wobei die Kunststoffteile über die Materialaufgabe (1) vorzugsweise durch Schwerkraft in die Abscheidekammer (8), über eine erste Fördereinrichtung (9) als Schwimmfraktion in die Waschkammer (6) und als Gutmaterial in die Abzugskammer (8) gelangen und von dort über eine zweite Fördereinrichtung (10) zu einem Materialaustrag (11) gefördert werden.

2. Vorrichtung nach Anspruch 1, **dadurch gekennzeichnet, dass** die Abscheidekammer (3) einen Schwergutabzug, vorzugsweise in Form einer im unteren Bereich angeordneten Schnecke, umfasst.

3. Vorrichtung nach Anspruch 1, **dadurch gekennzeichnet, dass** die Abscheidekammer (3) einen Container mit Entwässerungseinrichtung umfasst.

4. Vorrichtung nach einem der Ansprüche 1 bis 3, **dadurch gekennzeichnet, dass** die Abscheidekammer (3) ein vorzugsweise nach unten in die Kammer (3) hinein ragendes Rührwerk (3a) und/oder eine Lufteindüsung (3b) und/oder eine Wassereindüsung umfasst.

5. Vorrichtung nach einem der Ansprüche 1 bis 4, **dadurch gekennzeichnet, dass** sich die erste Fördereinrichtung (9) von der Abscheidekammer (3) in den Waschbereich (4) bzw. in die Waschkammer (6) erstreckt.

6. Vorrichtung nach einem der Ansprüche 1 bis 5, **dadurch gekennzeichnet, dass** sich die erste Fördereinrichtung (9) bis zu dem oder in den Abzugsbereich (7) bzw. in die Abzugskammer (8) erstreckt.

7. Vorrichtung nach einem der Ansprüche 1 bis 6, **dadurch gekennzeichnet, dass** die erste Fördereinrichtung (9) mindestens eine, vorzugsweise zwei Förderschnecken (12) umfasst.

8. Vorrichtung nach Anspruch 7, **dadurch gekennzeichnet, dass** die Förderschnecken (12) parallel zueinander angeordnet sind und vorzugsweise horizontal verlaufen.

9. Vorrichtung nach einem der Ansprüche 1 bis 7, **dadurch gekennzeichnet, dass** im Waschbereich (4), vorzugsweise in der Waschkammer (6), ein als Siebbereich ausgeführter Schneckentrog (14) vorgesehen ist, der zum Ablauf von Waschwasser (6) dient.

10. Vorrichtung nach einem der Ansprüche 1 bis 9, **dadurch gekennzeichnet, dass** im Waschbereich (4) Waschdüsen (13) zum Besprühen bzw. Waschen der dorthin geförderten Schwimmfraktion ausgebildet sind.

11. Vorrichtung nach Anspruch 10 oder 11, **dadurch gekennzeichnet, dass** unterhalb des Waschbereichs (4), vorzugsweise unterhalb des Siebbereichs, eine Auffangkammer (15) zum Sammeln des abgelaufenen Waschwassers angeordnet ist.

12. Vorrichtung nach Anspruch 11, **dadurch gekennzeichnet, dass** die Auffangkammer (15) als Sedimentabscheider ausgeführt ist, wobei der Klarlauf (16) der Auffangkammer (15) mit einer Pumpenkammer strömungsverbunden ist, von der aus der Klarlauf (16) als Waschwasser zu den Waschdüsen (13) gefördert wird.

13. Vorrichtung nach Anspruch 11 oder 12, **dadurch gekennzeichnet, dass** im Solenbereich der Auffangkammer (15) eine Absaugeinrichtung (17) für das Sediment wirkt, wobei die Absaugeinrichtung (17) vorzugsweise diskontinuierlich arbeitet.

14. Vorrichtung nach einem der Ansprüche 1 bis 13, **dadurch gekennzeichnet, dass** die in der Abzugskammer (8) vorgesehene zweite Fördereinrichtung (10) eine Förderschnecke (18) umfasst, die vorzugsweise zwischen den beiden dort enden Förderschnecken (12) der ersten Fördereinrichtung (9) läuft und sich zum Materialaustrag (11) erstreckt.

15. Vorrichtung nach einem der Ansprüche 1 bis 14, **dadurch gekennzeichnet, dass** zur Unterstützung des Materialtransports in der Abzugskammer (8) Lufteindüsungen und/oder Wassereindüsungen vorgesehen sind.

16. Vorrichtung nach einem der Ansprüche 1 bis 15, **dadurch gekennzeichnet, dass** im Bodenbereich der Abzugskammer (8) eine Ausschleußung (17) oder eine Absaugeinrichtung für das Sediment wirkt, wobei die Ausschleußung (17) oder die Absaugeinrichtung vorzugsweise diskontinuierlich arbeitet und das Sediment über eine Materialschleuse absaugt.

## Claims

1. Device for pre-washing comminuted plastics material components and for separating heavy materials or mineral components, such as sand, silt, etcetera, having a material dispenser (1) for the plastics material components which are intended to be pre-washed, a separation region (2) which is for the heavy materials and which comprises a separation chamber (3) which is filled with water during operation, a washing region (4) which is for further washing of the floating portion originating from the separation region (2) and which comprises a washing chamber (6) which operates with shower/spray water, and a removal region (7) for the useful material which is washed in the washing region (4) and which comprises a removal chamber (8) which is filled with water during operation, the plastics material components reaching the separation chamber (8) via the material dispenser (1), preferably by means of gravitational force, reaching the washing chamber (6) via a first conveying device (9) as a floating portion and reaching the removal chamber (8) as useful material and from there being conveyed via a second conveying device (10) to a material discharge (11).

2. Device according to claim 1, **characterised in that** the separation chamber (3) comprises a heavy material removal member, preferably in the form of a helical member which is arranged in the lower region.

3. Device according to claim 1, **characterised in that** the separation chamber (3) comprises a container with a water removal device.

4. Device according to any one of claims 1 to 3, **characterised in that** the separation chamber (3) comprises an agitation mechanism (3a) which preferably protrudes downwards into the chamber (3) and/or an air injection unit (3b) and/or a water injection unit.

5. Device according to any one of claims 1 to 4, **characterised in that** the first conveying device (9) extends from the separation chamber (3) into the washing region (4) or into the washing chamber (6).

6. Device according to any one of claims 1 to 5, **characterised in that** the first conveying device (9) extends as far as or into the removal region (7) or into the removal chamber (8).

7. Device according to any one of claims 1 to 6, **characterised in that** the first conveying device (9) comprises at least one, preferably two, helical conveying member(s) (12).

8. Device according to claim 7, **characterised in that** the helical conveying members (12) are arranged parallel with each other and preferably extend horizontally.

9. Device according to any one of claims 1 to 7, **characterised in that**, in the washing region (4), preferably in the washing chamber (6), there is provided a helical member trough (14) which is constructed as a sieve region and which serves to discharge washing water (6).

10. Device according to any one of claims 1 to 9, **characterised in that** washing nozzles (13) for spraying or washing the floating portion which is conveyed therein are formed in the washing region (4).

11. Device according to claim 10 or claim 11, **characterised in that** a collection chamber (15) for collecting the discharged washing water is arranged below the washing region (4), preferably below the sieve region.

12. Device according to claim 11, **characterised in that** the collection chamber (15) is constructed as a sediment separator, the clear phase (16) of the collection chamber (15) being connected in terms of flow to a pump chamber, from which the clear phase (16) is conveyed as washing water to the washing nozzles (13).

13. Device according to claim 11 or claim 12, **characterised in that** a suction device (17) for the sediment acts in the lower region of the collection chamber (15), the suction device (17) preferably operating in a discontinuous manner.

14. Device according to any one of claims 1 to 13, **characterised in that** the second conveying device (10) which is provided in the removal chamber (8) comprises a helical conveying member (18) which preferably extends between the two helical conveying members (12) of the first conveying device (9) ending at that location and which extends to the material discharge (11).

15. Device according to any one of claims 1 to 14, **characterised in that** in order to support the material transport in the removal chamber (8) air injection units and/or water injection units are provided.

16. Device according to any one of claims 1 to 15, **characterised in that** a discharge (17) or a suction device for the sediment acts in the base region of the removal chamber (8), the discharge (17) or the suction device preferably operating in a discontinuous manner and drawing off the sediment via a material lock.

## Revendications

1. Dispositif pour le prélavage de pièces en matière plastique fragmentées et pour la séparation des sédiments ou composants minéraux, tels que le sable, le limon, etc., comportant une entrée des matériaux (1) pour les pièces en matière plastique à prélaver, une zone de séparation (2) pour les sédiments, qui comporte une chambre de séparation (3) remplie d'eau en cours de service, une zone de lavage (4) pour le lavage consécutif de la fraction flottante sortant de la zone de séparation (2), laquelle comporte une chambre de lavage (6) fonctionnant avec de l'eau de douche/d'aspersion, et une zone de retrait (7) pour le matériau accepté, lavé dans la zone de lavage (4), laquelle comporte une chambre de retrait (8) remplie d'eau en cours de service, les pièces en matière plastique parvenant dans la chambre de séparation (8) par l'intermédiaire de l'entrée des matériaux (1), de préférence sous l'effet de la force de gravité, par l'intermédiaire d'un premier dispositif de transport (9) dans la chambre de lavage (6) sous forme de fraction flottante et dans la chambre d'évacuation (8) sous forme de matériau accepté et étant transportées à partir de là via un deuxième dispositif de transport (10) vers une sortie des matériaux (11).

2. Dispositif selon la revendication 1, **caractérisé en ce que** la chambre de séparation (3) comporte un système d'évacuation des sédiments, de préférence sous la forme d'une vis sans fin disposée dans la zone inférieure.

3. Dispositif selon la revendication 1, **caractérisé en ce que** la chambre de séparation (3) comporte un conteneur avec un dispositif de drainage.

4. Dispositif selon l'une quelconque des revendications 1 à 3, **caractérisé en ce que** la chambre de séparation (3) comporte un mécanisme de brassage (3a) s'engageant vers le bas à l'intérieur de la chambre (3) et/ou un système d'injection d'air (3b) et/ou un système d'injection d'eau.

5. Dispositif selon l'une quelconque des revendications 1 à 4, **caractérisé en ce que** le premier dispositif de transport (9) s'étend depuis la chambre de séparation (3) vers la zone de lavage (4), plus précisément vers la chambre de lavage (6).

6. Dispositif selon l'une quelconque des revendications 1 à 5, **caractérisé en ce que** le premier dispositif de transport (9) s'étend jusque vers ou dans la zone de retrait (7), plus précisément dans la chambre de retrait (8).

7. Unité de guidage d'air selon l'une quelconque des revendications 1 à 6, **caractérisé en ce que** le premier dispositif de transport (9) comporte au moins une, de préférence deux vis de transport (12).

8. Dispositif selon la revendication 7, **caractérisé en ce que** les vis de transport (12) sont parallèles entre elles et s'étendent de préférence horizontalement.

9. Dispositif selon l'une quelconque des revendications 1 à 7, **caractérisé en ce que** dans la zone de lavage (4), de préférence dans la chambre de lavage (6), est prévue une cuve à vis sans fin (14), réalisée sous forme de zone de tamisage, qui sert à l'évacuation de l'eau de lavage (6).

10. Dispositif selon l'une quelconque des revendications 1 à 9, **caractérisé en ce que** dans la zone de lavage (4) sont réalisées des buses de lavage (13) pour asperger ou laver la fraction flottante transportée jusque dans ladite zone.

11. Dispositif selon la revendication 10 ou 11, **caractérisé en ce qu'**une chambre de réception (15), destinée à collecter l'eau de lavage évacuée, est disposée en dessous de la zone de lavage (4), de préférence en dessous de la zone de tamisage.

12. Dispositif selon la revendication 11, **caractérisé en ce que** la chambre de réception (15) est réalisée sous la forme d'un séparateur de sédiments, l'eau claire (16) de la chambre de réception (15) étant en liaison fluidique avec une chambre de pompage, à partir de laquelle l'eau claire (16) est transportée sous forme d'eau de lavage vers les buses de lavage (13).

13. Dispositif selon la revendication 11 ou 12, **caractérisé en ce que** dans la zone du fond de la chambre de réception (15) agit un dispositif d'aspiration (17) pour les sédiments, ledit dispositif d'aspiration (17) fonctionnant de préférence en discontinu.

14. Dispositif selon l'une quelconque des revendications 1 à 13, **caractérisé en ce que** le deuxième dispositif de transport (10), prévu dans la chambre de retrait (8), comporte une vis de transport (18) qui est disposée de préférence entre les deux vis de transport (12) du premier dispositif de transport (9), lesquelles se terminent à cet emplacement, et s'étend vers la sortie des matériaux (11).

15. Dispositif selon l'une quelconque des revendications 1 à 14, **caractérisé en ce que** des systèmes d'injection d'air et/ou des systèmes d'injection d'eau sont prévus pour favoriser le transport des matériaux dans la chambre de retrait (8).

16. Dispositif selon l'une quelconque des revendications 1 à 15, **caractérisé en ce que** dans la zone du fond de la chambre de retrait (8) agit un système d'évacuation (17) ou un dispositif d'aspiration pour les sédiments, le système d'évacuation (17) ou le dispositif d'aspiration fonctionnant de préférence en discontinu et aspirant les sédiments par l'intermédiaire d'un sas pour matériaux.
